# EUROPEAN PATENT APPLICATION

(11) **EP 2 538 595 A1**
(43) Date of publication of application: **26.12.2012**
(21) Application number: 11742239.4
(22) Date of filing: 09.02.2011
(51) Int. Cl.: H04J 99/00, H04J 11/00, H04W 16/28

(54) **RADIO BASE STATION DEVICE, MOBILE TERMINAL DEVICE, AND WIRELESS COMMUNICATION METHOD**

(30) Priority: 15.02.2010 JP 2010030626
(71) Applicant: NTT DOCOMO, INC., Chiyoda-ku Tokyo 100-6150 (JP)
(72) Inventor: KAKISHIMA, Yuichi, Tokyo 100-6150 (JP); TAOKA, Hidekazu, Tokyo 100-6150 (JP); KAWAMURA, Teruo, Tokyo 100-6150 (JP); KISHIYAMA, Yoshihisa, Tokyo 100-6150 (JP)
(74) Representative: HOFFMANN EITLE
(86) International application number: PCT/JP2011/052693
(87) International publication number: WO 2011/099496

(57) **Abstract**

To provide a radio base station apparatus, mobile terminal device and wireless communication method for enabling the SRS to be used efficiently in an LTE-A system, a wireless communication method of the invention is characterized in that a radio base station apparatus performs OFDM modulation on a transmission signal including transmission information on sounding reference signals for each transmission antenna, and transmits the OFDM-modulated transmission signal, and that a mobile terminal device receives the signal including the transmission information, controls a transmission aspect of the sounding reference signals for each transmission antenna based on the transmission information, and transmits the sounding reference signals in the transmission aspect for each transmission antenna.

## Description

### Technical Field

The present invention relates to a radio base station apparatus, mobile terminal device and wireless communication method using SRSs (Sounding Reference Signals) efficientlyinanLTE-A (LongTermEvolution-Advanced) system.

### Background Art

In LTE (Long Term Evolution) systems specified in the 3GPP (3^{rd} Generation Partnership Project) , to actualize faster transmission, MIMO (Multiple Input Multiple Output) transmission is adopted in which a radio base station apparatus uses a plurality of transmission antennas. Further, in LTE-Advanced (LTE-A) systems with the purpose of increasing the band and speed more than the LTE system, MIMO multiplexing transmission of maximum 8 streams is performed in downlink, and MIMO multiplexing transmission of maximum 4 streams is performed in uplink.

In MIMO transmission in uplink, a transmission side (mobile terminal device: UE) transmits an SRS (Sounding Reference Signal) from each of transmission antennas (for example, #1, #2). A reception side (radio base station apparatus: eNB) measures each SRS, selects a phase/amplitude control amount based on a channel variance for each of transmission antennas (#1, #2), and transmits a PMI (Precoding Matrix Indicator) to the transmission side as feedback. The transmission side applies different phase/amplitude control (multiplication by a precoding weight) for each transmission antenna to the same signal to transmit (FIG. 1 shows an example of the case of two transmission antennas) (Non-patent Document 1).

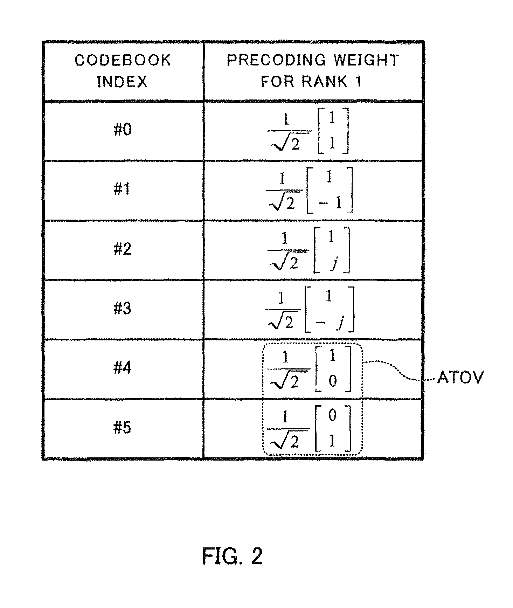

Further, in MIMO transmission in uplink, in an environment in which Antenna Gain Imbalance (AGI) is large due the effect of hand gripping or the like, precoding is performed using an ATOV (Antenna turn off vector) (halting transmission from a transmission antenna with a large propagation loss) as a PMI (see FIG. 2) . By using thus ATOV, it is possible to provide the mobile terminal device with battery saving.

### Prior Art Literature

### Non-patent Literature

[Non-patent Literature 1] 3GPP, TR36.912 (V9.1.0) "Feasibility study for Further Advancements for E-UTRA (LTE-Advanced)," December 2009.

### Summary of Invention

### Technical Problem

In precoding in uplink MIMO transmission, it is necessary to perform channel estimation for each transmission antenna to select the PMI. In other words, the SRS is needed for each transmission antenna, and the number of resources for the SRS increases. Further, when the ATOV is used for power saving in an environment in which AGI is large due to hand griping or the like, it becomes useless to transmit the SRS from a transmission antenna that does not transmit a PUSCH (Physical Uplink Shared Channel) signal.

The present invention was made in view of such a respect, and it is an object of the invention to provide a radio base station apparatus, mobile terminal device and wireless communication method for enabling the SRS to be used efficiently in an LTE-A system.

### Solution to the Problem

A radio base station apparatus of the invention is characterized by having OFDM modulation section for performing OFDM modulation on a transmission signal including transmission information on sounding reference signals for each transmission antenna, and transmission section for transmitting the transmission signal subjected to OFDM modulation.

A mobile terminal device of the invention is characterized by having a plurality of transmission antennas, reception section for receiving a signal including transmission information on sounding reference signals for each of the transmission antennas, control section for controlling a transmission aspect of the sounding reference signals for each of the transmission antennas based on the transmission information, and transmission section for transmitting the sounding reference signals in the transmission aspect for each of the transmission antennas.

A wireless communication method of the invention is characterized by having the steps in a radio base station apparatus of performing OFDM modulation on a transmission signal including transmission information on sounding reference signals for each transmission antenna, and transmitting the transmission signal subjected to OFDM modulation, and the steps in a mobile terminal device of receiving the signal including the transmission information, controlling a transmission aspect of the sounding reference signals for each transmission antenna based on the transmission information, and transmitting the sounding reference signals in the transmission aspect for each transmission antenna.

### Advantageous Effect of the Invention

According to the invention, a radio base station apparatus performs OFDM modulation on a transmission signal including transmission information on sounding reference signals for eachtransmission antenna, and transmits the transmission signal subjected to OFDM modulation, a mobile terminal device receives the signal including the transmission information, controls a transmission aspect of the sounding reference signals for each transmission antenna based on the transmission information, and transmits the sounding reference signals in the transmission aspect for each transmission antenna, and therefore, it is possible to efficiently use the SRS in the LTE-A system.

### Brief Description of Drawings

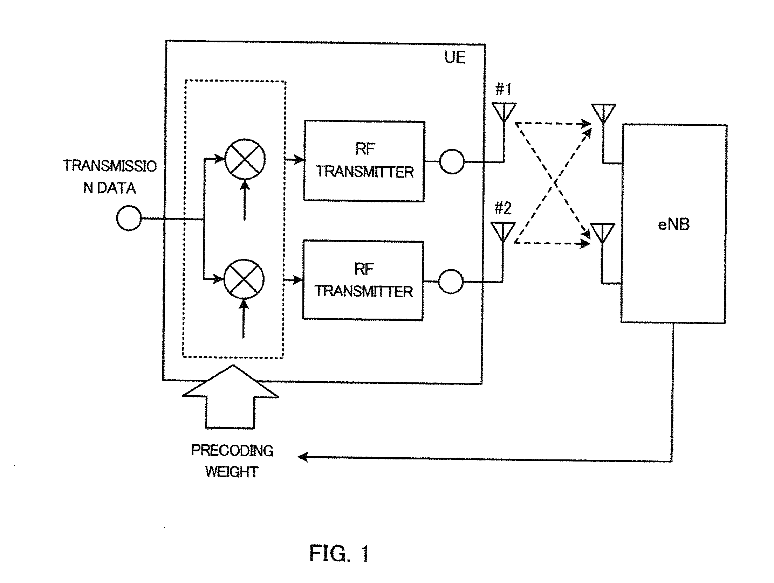

FIG. 1 is a diagram to explain MIMO transmission in uplink;
FIG. 2 is a diagram illustrating a precoding codebook used in MIMO transmission in uplink;
FIG. 3 is a diagram to explain an SRS arrangement;
FIG. 4 is a diagram to explain a transmission aspect of SRS;
FIG. 5 is a diagram illustrating a procedure of periodic SRS transmission;
FIG. 6 contains diagrams to explain transmission parameters of SRS;
FIGs. 7 (a) and 7 (b) are diagrams to explain transmission parameters of SRS;
FIG. 8 is another diagram to explain transmission parameters of SRS;
FIG. 9 is still another diagram to explain transmission parameters of SRS;
FIG. 10 is still another diagram to explain transmission parameters of SRS;
FIGs. 11(a) and 11(b) are diagrams to explain transmission parameters of SRS;
FIG. 12 is a diagram to explain IFDMA and CDM;
FIG. 13 is a diagram to explain transmission parameters of SRS;
FIG. 14 is another diagram to explain transmission parameters of SRS;
FIG. 15 is a diagram illustrating a procedure of aperiodic SRS transmission;
FIG. 16 is a diagram showing an example of aperiodic SRS transmission;
FIG. 17 is a diagram to explain transmission parameters of SRS;
FIG. 18 is a diagram to explain an SRS multiplexing aspect;
FIG. 19 is a diagram to explain another SRS multiplexing aspect;
FIG. 20 is a diagram to explain still another SRS multiplexing aspect;
FIG. 21 is a diagram to explain still another SRS multiplexing aspect;
FIG. 22 is a diagram illustrating a radio communication system for performing a wireless communication method of the invention;
FIG. 23 is a diagram illustrating a schematic configuration of a radio base station apparatus of the invention;
FIG. 24 is a block diagram to explain processing sections including a baseband processing section of the radio base station apparatus of the invention;
FIG. 25 is a diagram illustrating a schematic configuration of a mobile terminal device of the invention; and
FIG. 26 is a block diagram to explain processing sections including a baseband processing section of the mobile terminal device of the invention.

### Description of Embodiments

An Embodiment of the invention will specifically be described with reference to accompanying drawings.
In a wireless communication method of the invention, a radio base station apparatus performs OFDM modulation on a transmission signal including transmission information on sounding reference signals (SRSs) for each transmission antenna, and transmits the OFDM-modulated transmission signal, and a mobile terminal device receives the signal including the transmission information, controls a transmission aspect of the sounding reference signals for each transmission antenna based on the transmission information, and transmits the sounding reference signals in the transmission aspect for each transmission antenna.

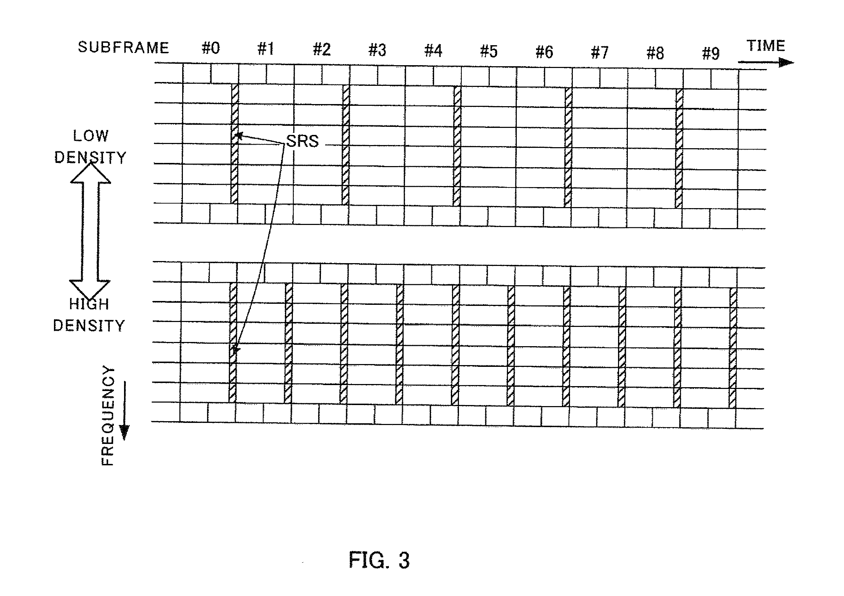

The SRS is herein described. The uplink SRS is a reference signal used in measuring a channel variance in uplink, reception SINR (Signal to noise plus interference ratio) and the like. The SRS is transmitted over the whole band periodically independently of a PUSCH signal and a PUCCH (Physical Control Channel) signal. As shown in FIG. 3, the SRS is multiplexed into a last SC-FDMA (Single Carrier-Frequency Division Multiple Access) symbol in a subframe . Further, for overhead adj ustments , it is possible to change the subframe to multiplex the SRS. In other words, as shown in FIG. 3, the SRS may be multiplexed into a last SC-FDMA symbol every two subframes (low density), or may be multiplexed into a last SC-FDMA symbol of each subframe (high density) . In this case, a multiplexing subframe pattern is notified on a broadcast channel (for each cell) common to users.

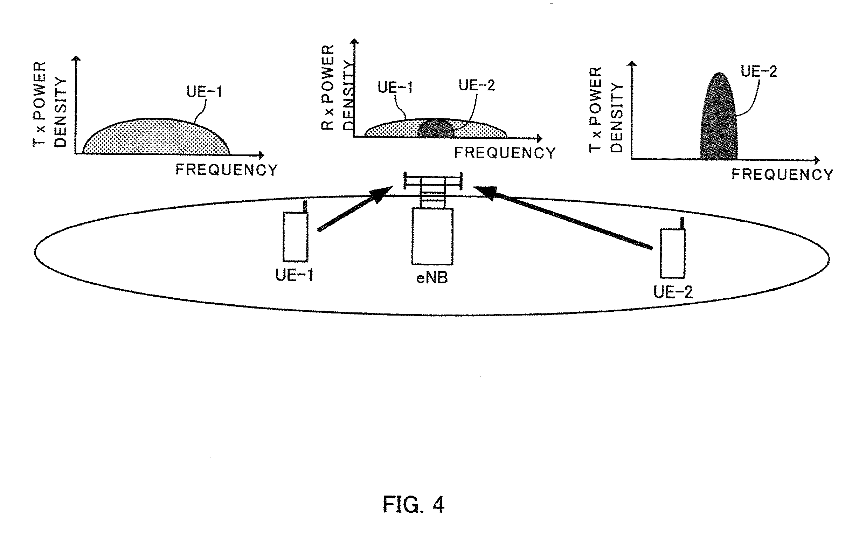

As shown in FIG. 4, for a mobile terminal device (UE-1) near a radio base station apparatus (eNB) , the SRS is transmitted in a wide band over the whole system band. Meanwhile, for a mobile terminal device (UE-2) at a cell edge, the SRS is transmitted in a narrow band to improve accuracy of reception SINR measurement in the radio base station apparatus. Thus, the SRS has a plurality of bandwidths, and is transmitted with the optimal bandwidth selected for each user. More specifically, the SRS is selected from 4 types of bandwidths. In addition, in the 3GPP, an SRS (Aperiodic SRS) to transmit non-periodically is also studied in addition to the SRS (Periodic STS) to transmit periodically.

As described above, in the LTE-A system, MIMO multiplexing transmission of maximum 4 streams is performed in uplink. Therefore, in precoding in uplink MIMO transmission, it is necessary to perform channel estimation for each transmission antenna to select the PMI. In other words, the SRS is needed for each transmission antenna, and the number of resources for the SRS increases. Further, in using the ATOV for power saving in an environment with large AGI due to hand griping and the like, it becomes useless to transmit the SRS from a transmission antenna that does not transmit a PUSCH signal. In this way, in the case of performing MIMO multiplexing transmission of maximum 4 streams in uplink in the LTE-A system, it is required to use the SRS efficiently.

Therefore, in the invention, a radio base station apparatus transmits transmission information of the SRS for each transmission antenna to a mobile terminal device, and the mobile terminal device controls a transmission aspect of the SRS based on the transmission information, and transmits the SRS for each transmission antenna. By this means, it is possible to use the SRS efficiently in the case of performing MIMO multiplexing transmission of maximum 4 streams in uplink in the LTE-A system.

Described herein are transmission information and transmission aspects of the SRS for each transmission antenna.

### <Periodic SRS>

When the SRS is transmittedperiodically, as the transmission information, there are a transmission interval of SRS, SRS transmission duration, information indicative of ON/OFF of SRS transmission, offset value of transmission timing of SRS, transmission ratio of SRS for each transmission antenna, transmission bandwidth of SRS, information indicative of ON/OFF of hopping of SRS transmission, repetition factor of SRS, spreading code sequence for SRS, etc. The transmission information is notified by user specific higher layer signaling (RRC (Radio Resource Control) signaling) .

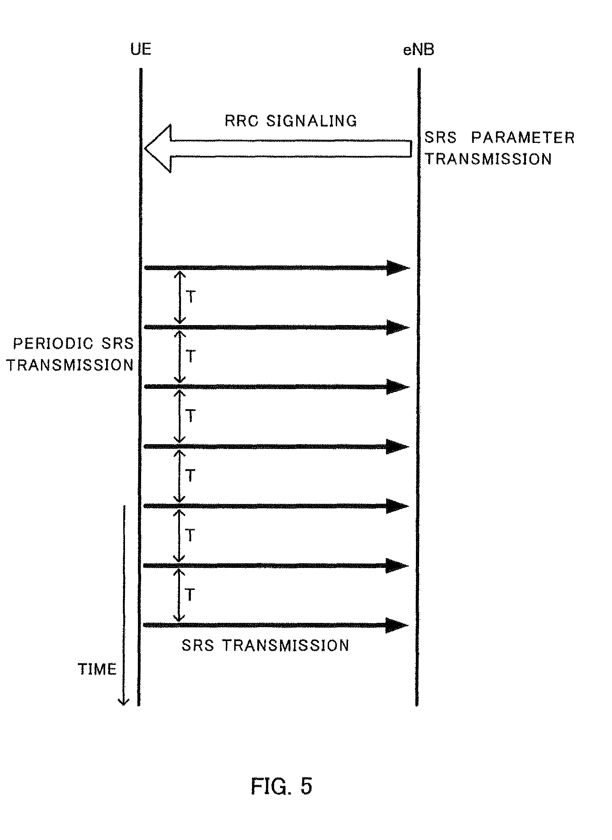

When the SRS is transmitted periodically, as shown in FIG. 5, a radio base station apparatus (eNB) transmits SRS parameters to amobile terminal device (UE) by higher layer signaling (RRC signaling) . The SRS parameters are the above-mentioned bandwidth, hopping ON/OFF, frequency offset, cyclic shift sequence, repetition factor, transmission interval, transmission timing offset, etc.

When the mobile terminal device receives SRS parameters by RRC signaling, the mobile terminal device transmits the SRS periodically at particular time intervals (T) . At this point, the mobile terminal device controls a transmission aspect of the SRS based on the SRS parameters, and transmits the SRS to the radio base station apparatus. In addition, in periodic SRS transmission, an uplink grant does not include information indicative of SRS transmission timing.

### <SRS transmission interval: Periodicity>

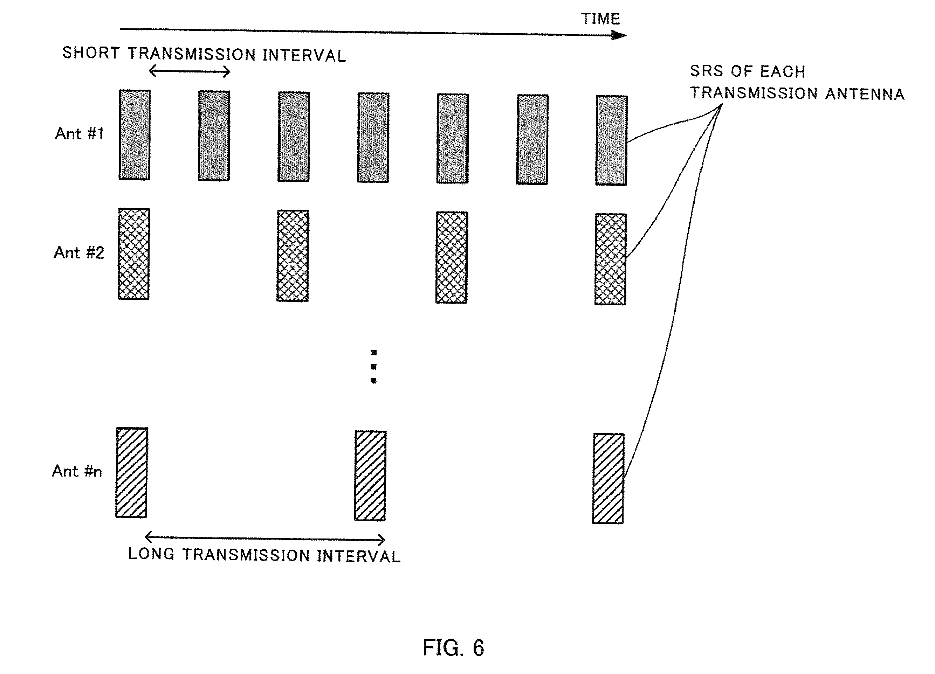

In the invention, transmission intervals of SRS are set for each transmission antenna of the mobile terminal device. As shown in FIG. 6, a transmission antenna #1 (Ant #1) is set for a relatively short transmission interval, a transmission antenna #2 (Ant #2) is set for a next shorter transmission interval, and a transmission antenna #n (Ant #n) is set for a relatively long transmission interval. The transmission information in this case is information that associates the transmission antenna number with the transmission interval.

The transmission interval is determined based on antenna gain and propagation loss. For example, the transmission interval of SRS is set to be longer on a transmission antenna with low antenna gain, or transmission antenna with a large propagation loss. By this means, it is possible to reduce power consumption of the mobile terminal device. In addition, it is essential only that the transmission interval is set individually for each transmission antenna, and the transmission intervals of SRS may be different between all transmission antennas as shown in FIG. 6, or the transmission intervals may be the same among a plurality of transmission antennas.

### <SRS transmission duration: Duration>

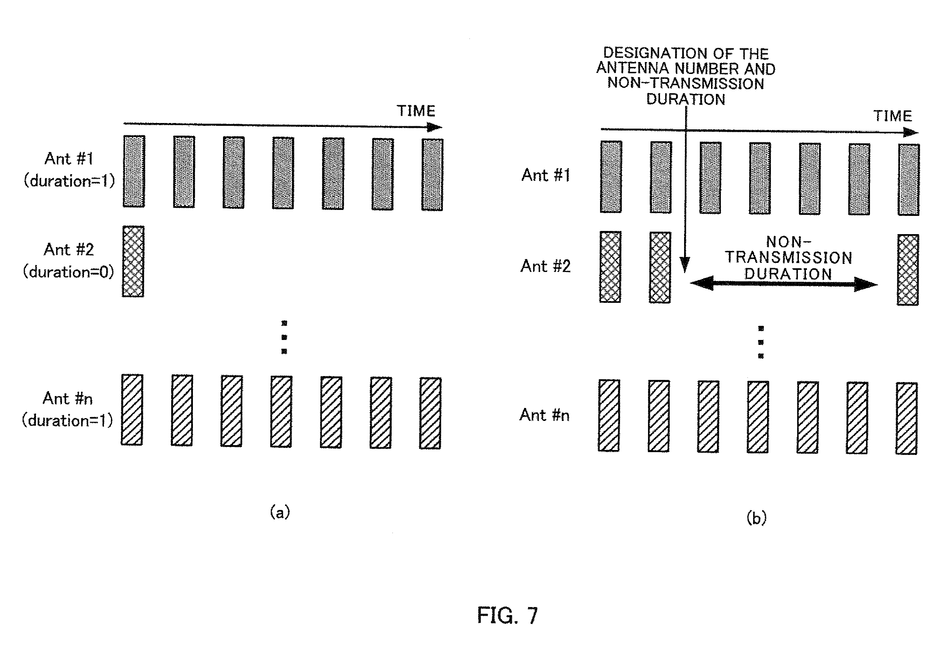

In the invention, the SRS transmission duration is set for each transmission antenna of the mobile terminal device. The SRS transmission duration is information indicative of transmitting the SRS temporarily, or successively, or providing the duration (non-transmission duration) in which the SRS is not transmitted. For example, as shown in FIG. 7 (a) , the transmission antenna #1 (Ant #1) and the transmission antenna #n (Ant #n) are set for successive transmission (Indefinite) (duration=1) , and the transmission antenna #2 (Ant #2) is set for one shot transmission (Single) (duration=0) . The transmission information in this case is information that associates the transmission antenna number with the duration. Further, for the non-transmission duration of SRS, for example, as shown in FIG. 7 (b) , the transmission antenna #2 (Ant #2) is provided with the non-transmission duration of SRS. The transmission information in this case is information that associates the transmission antenna number with designation (start position, period, etc.) of the non-transmission duration.

For example, it is possible to determine the transmission duration based on the average reception SINR or propagation loss of each transmission antenna. Forexample, for a transmission antenna with a large propagation loss, the transmission duration of SRS is set at one shot (single) . By this means, it is possible to make a transmission amplifier of the antenna with a large propagation loss at OFF in SRS non-transmission, and it is thereby possible to reduce power consumption of the mobile terminal device. Further, the non-transmission duration is determined based on the propagation loss. For example, for a transmission antenna with a large propagation loss, non-transmission duration of SRS is provided. By this means, it is possible to reduce power consumption. In addition, it is essential only that the transmission duration of the SRS is set individually for each transmission antenna, and which transmission antenna is assigned which transmission duration is not limited to FIG. 7, and is capable of being set as appropriate. Further, designation of the non-transmission duration may be notified to the mobile terminal device by RRC signaling common to antennas.

### (Information indicative of ON/OFF of SRS transmission)

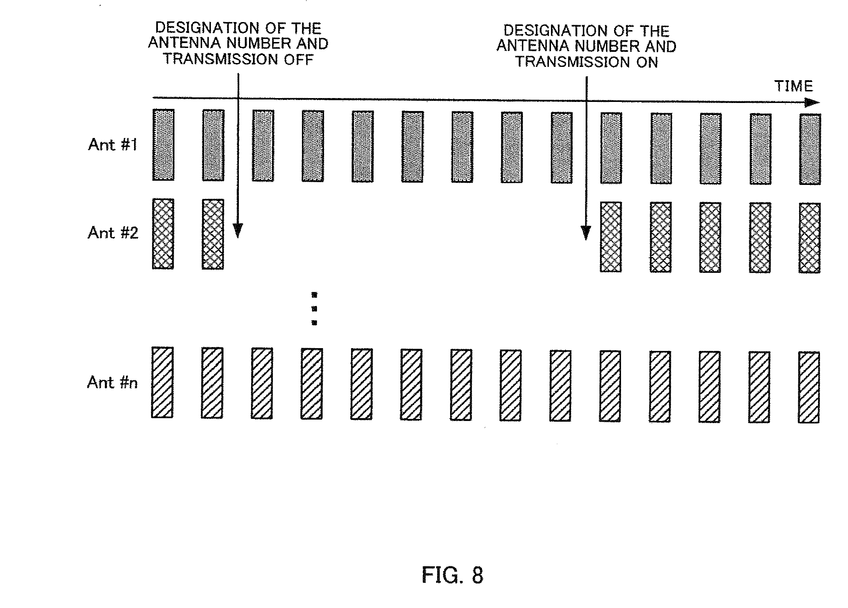

In the invention, ON/OFF of SRS transmission is set for each transmission antenna of the mobile terminal device. For example, as shown in FIG. 8, for the transmission antenna #1 (Ant #1) and the transmission antenna #n (Ant #n), SRS transmission is set at ON, and for the transmission antenna #2 (Ant #2) , SRS transmission is set at OFF. The transmission information in this case is information that associates the transmission antenna number with designation of transmission OFF or information that associates the transmission antenna number with designation of transmission ON.

It is possible to determine ON/OFF of SRS transmission based on a propagation loss. For example, for a transmission antenna with a large propagation loss, the SRS is set for transmission OFF for a certain period. By this means, it is possible to control SRS transmission ON/OFF for arbitrary time, transmit the SRS in a good reception quality state, and transmit the SRS efficiently. In addition, it is essential only that ON/OFF of SRS transmission is set individually for each transmission antenna, and which transmission antenna is set for SRS transmission OFF for a certain period is not limited to FIG. 8, and is capable of being set as appropriate.

### (Offset value of SRS transmission timing: Subframe offset)

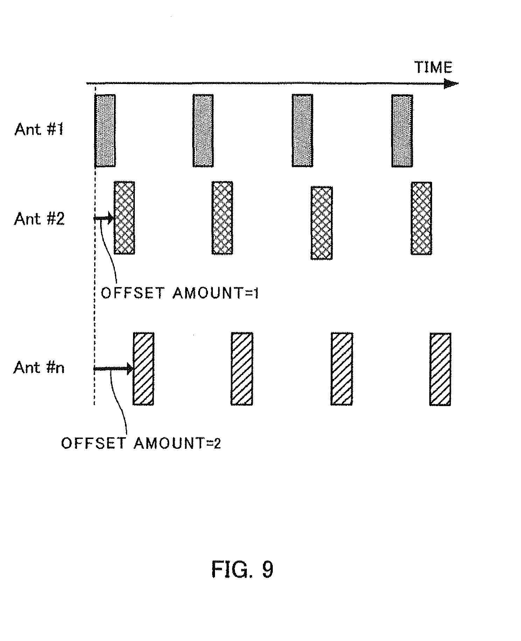

In the invention, an offset value (offset of an SRS transmission subframe) of SRS transmission timing is set for each transmission antenna of the mobile terminal device. For example, as shown in FIG. 9, the transmission antenna #1 (Ant #1) is set for no offset, the transmission antenna #2 (Ant #2) is set for the offset amount=1, and the transmission antenna #n (Ant #n) is set for the offset amount=2. The transmission information in this case is information that associates the transmission antenna number with the offset amount.

It is possible to determine the offset value of SRS transmission timing basedonatransmissionaspect (multiplexingmethod) of SRS. Forexample, when the SRS is transmitted in TDM (Time Division Multiplexing), the time offset is set for each transmission antenna. By this means, it is possible to apply flexible multiplexing to the SRS. In addition, it is essential only that the offset value of SRS transmission timing is set individually for each transmission antenna, and which transmission antenna is set for which offset value is not limited to FIG. 9, and is capable of being set as appropriate.

### (Transmission ratio of SRS for each transmission antenna)

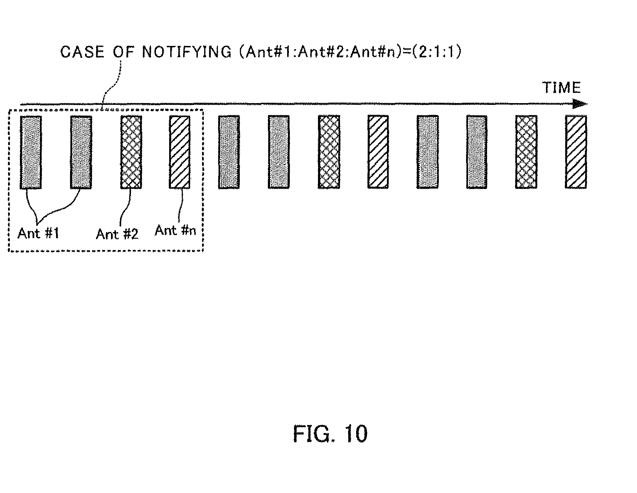

In the invention, a transmission ratio of SRS is set for each transmission antenna of the mobile terminal device. For example, when the transmission ratio of SRS between the transmission antenna #1 (Ant #1) , the transmission antenna #2 (Ant #2) and the transmission antenna #n (Ant #n) is 2:1:1 (=Ant #1:Ant#2:Ant #n) , as shown in FIG. 10, for a particular period, the rate is set so that the SRS transmitted from the Ant #1 is "2", the SRS transmitted from the Ant #2 is "1" , and that the SRS transmitted from the Ant #n is "1" . The transmission information in this case is information that associates the transmission antenna number with the rate of SRS. For example, it is possible to determine the transmission ratio of SRS based on the average reception SINR or propagation loss of each transmission antenna. For example, for a transmission antenna with a large propagation loss, the transmission rate of SRS is set to be small. B this means, it is possible to efficiently use resources of SRS. In addition, the transmission ratio of SRS for each transmission antenna is not limited to FIG. 10, and is capable of being modified as appropriate.

### (Transmission bandwidth of SRS: Bandwidth)

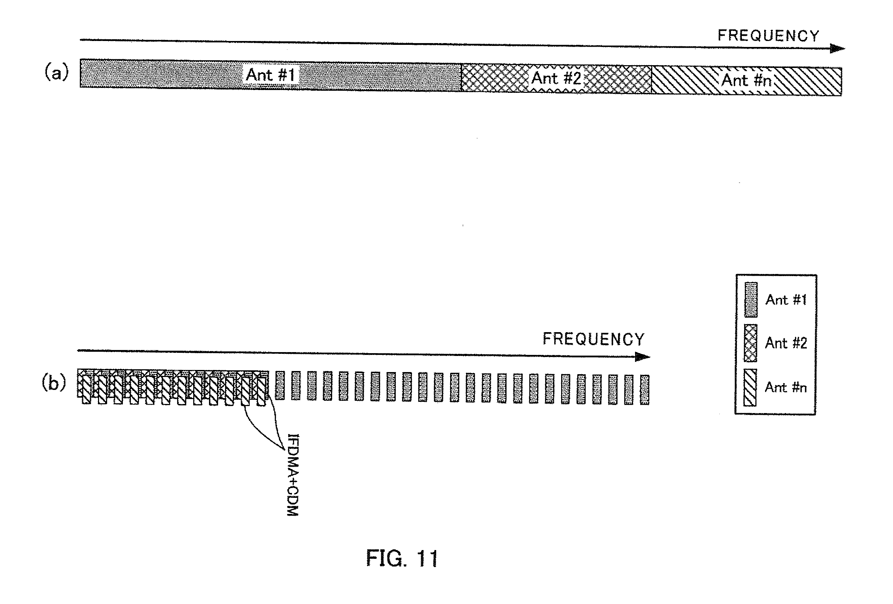

In the invention, the bandwidth of SRS is set for each transmission antenna of the mobile terminal device. For example, for the transmission antenna #1 (Ant #1) , the transmission antenna #2 (Ant #2) and the transmission antenna #n (Ant #n) , the bandwidth to transmit the SRS is set as shown in FIG. 11. This transmission bandwidth includes information (Frequency-domain position) of a frequency position of the SRS for each mobile terminal device when necessary. When the SRS is transmitted in Frequency Division Multiplexing (FDM) , as shown in FIG. 11 (a) , the frequency band is assigned to each of the transmission antenna #1 (Ant #1) , the transmission antenna #2 (Ant #2) and the transmission antenna #n (Ant #n) . Meanwhile, in the case of transmitting in Interleaved Frequency Division Multiple Access (IFDMA) and Code Division Multiplexing (CDM) , as shown in FIG. 11 (b) , the frequency bands are assigned to each of the transmission antenna #1 (Ant #1) , the transmission antenna #2 (Ant #2) and the transmission antenna #n (Ant #n) . The transmission information in this case is information that associates the transmission antenna number with the frequency bandwidth (frequency position). Particularly, in the case as shown in FIG. 11 (b) , as a method of sending the transmission information, the broadcast channel is used for designation-capable bandwidths (cell-specific SRS bandwidth set: SRS Bandwidth configuration), and higher layer signaling is used for the actual SRS transmission bandwidth. Accordingly, the transmission bandwidth is a bandwidth selected in the bandwidths broadcast on the broadcast channel.

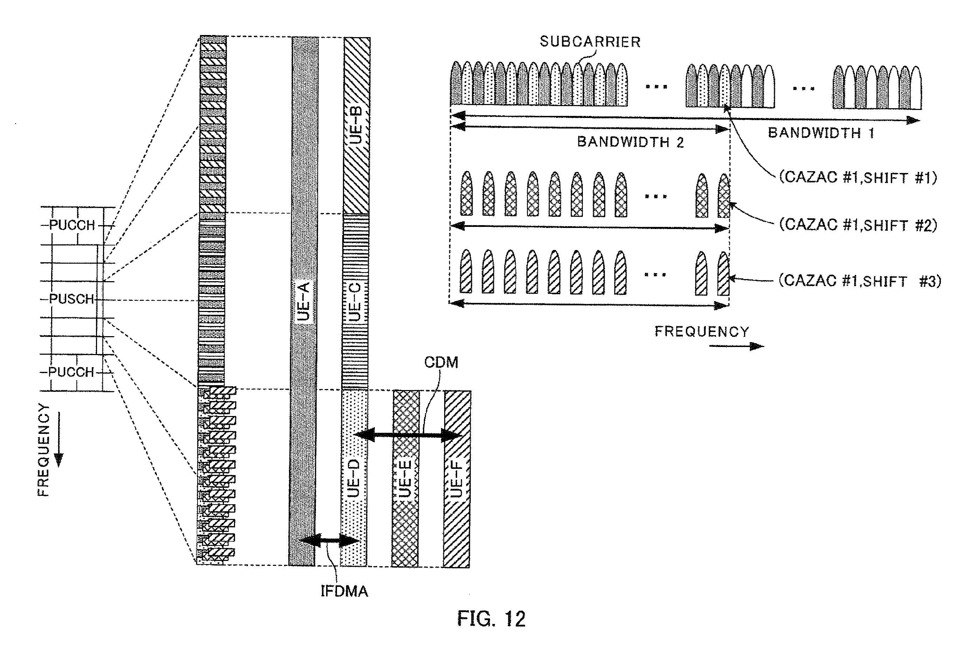

IFDMA is described herein. IFDMA is a radio access scheme having features of both multicarrier and signal-carrier. In IFDMA, as in OFDMA of multicarrier, the entire band is divided into a plurality of narrow bands, subcarriers arranged at equal intervals are multiplexed to respective users so that the users are alternately assigned in the shape of comb teeth, and orthogonal radio access is thereby achieved. Further, as in single-carrier, it is possible to generate a transmission signal only by signal processing in the time domain. In FIG. 12, a user A (UE-A) and user D (UE-D), user A (UE-A) and user C (UE-C), and user A (UE-A) and user B (UE-B) are respectively multiplexed in IFDMA.

Further, in FIG. 11 (b) , SRSs are multiplexed in CDM in addition to IFDMA. In FIG. 11 (b) , the SRS of the transmission antenna #1 (Ant #1) , the SRS of the transmission antenna #2 (Ant #2) , and the SRS of the transmission antenna #n (Ant #n) are multiplexed in IFDMA, and the SRS of the transmission antenna #2 (Ant #2), and the SRS of the transmission antenna #n (Ant #n) are multiplexed in CDM. In multiplexing in CDM, as shown in FIG. 12, (CAZAC (Constant Amplitude Zero Correlation)) codes for orthogonalizing and multiplexing by orthogonal codes are used, and the cyclic shift amount is varied (shift #1 to shift #3) . In FIG. 12, the user D (UE-D) , user E (UE-E) and user F (UE-F) are multiplexed in CDM.

It is possible to determine the transmission bandwidth of SRS based on a propagation loss for each transmission antenna. For example, in the case as shown in FIG. 11 (a) , the transmission bandwidth of SRS is narrowed for a transmission antenna with a large propagation loss, while being broadened for a transmission antenna with a small propagation loss. By thismeans, it is possible to reduce transmission power (powerconsumption) in the mobile terminal device. In addition, it is essential only that the transmission bandwidth of SRS is set for each transmission antenna, and the bandwidths are not limited to FIG. 11, and are capable of being set as appropriate.

### (Information indicative of ON/OFF of hopping of SRS transmission: Frequency-hopping information)

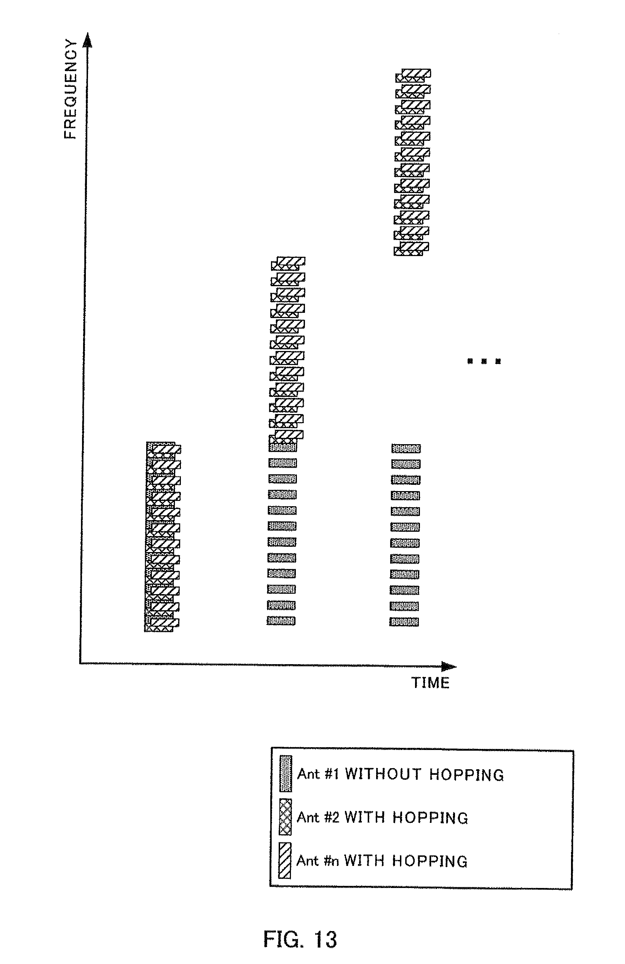

In the invention, ON/OFF of hopping of SRS transmission is set for each transmission antenna of the mobile terminal device. For example, as shown in FIG. 13, the SRS of the transmission antenna #1 (Ant #1) is not provided with hopping, and the SRS of the transmission antenna #2 (Ant #2) and the SRS of the transmission antenna #n (Ant #n) are provided with hopping. The transmission information in this case is information that associates the transmission antenna number with the presence or absence of hopping. In addition, ON/OFF of hopping of SRS transmission for each transmission antenna is not limited to FIG. 13, and is capable of being set as appropriate.

### (Repetition factor of SRS: Transmission Comb)

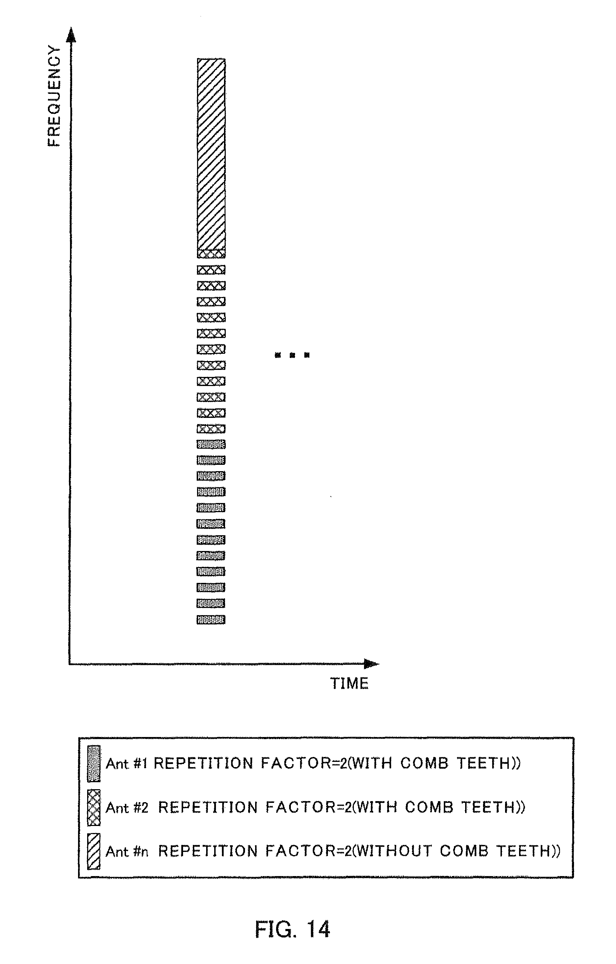

In the invention, the repetition factor (the presence or absence of comb teeth state) of SRS is set for each transmission antenna of the mobile terminal device. For example, as shown in FIG. 14, the SRS of the transmission antenna #1 (Ant #1) and the SRS of the transmission antenna #2 (Ant #2) are set for the presence of comb teeth state, and the SRS of the transmission antenna #n (Ant #n) is set for the absence of comb teeth state. The transmission information in this case is information that associates the transmission antenna number with the repetition factor. For example, it is possible to determine the presence or absence of comb teeth state of SRS transmission based on the average reception SINR or propagation loss of each transmission antenna. For example, a transmission antenna with a large propagation loss is set for the presence of comb teeth state of SRS transmission. By this means, it is possible to efficiently use resources of SRS. In addition, the presence or absence of comb teeth state for each transmission antenna is not limited to FIG. 14, and is capable of being set as appropriate.

### (Spreading code sequence for SRS: Cyclic shift)

In the invention, the spreading code sequence for SRS is set for each transmission antenna of the mobile terminal device. The transmission information in this case is information that associates the transmission antenna number with the CAZAC code and cyclic shift amount. CDM multiplexing is performed when transmission antennas are set for the same SRS transmission bandwidth. By this means, it is possible to perform channel quality measurement, PMI selection, etc. using SRSs transmitted at the same time from a plurality of transmission antennas. In addition, as the spreading code sequence, instead of the cyclic shift, block spreading may be used.

### <Aperiodic SRS>

When the SRS is transmitted non-periodically, as the transmission information, there are transmission timing of SRS, transmission bandwidth of SRS, transmission frequency offset of SRS, repetition factor of SRS, spreading code sequence for SRS, etc. The transmission information is transmitted in an uplink grant.

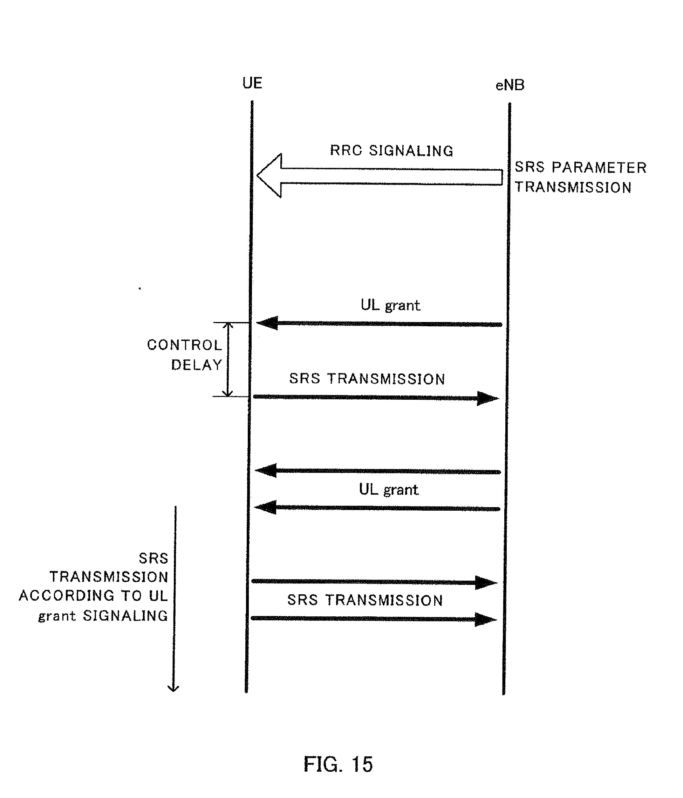

When the SRS is transmitted non-periodically, as shown in FIG. 15, a radio base station apparatus (eNB) transmits principal transmission information (SRS parameters) to a mobile terminal device (UE) by higher layer signaling (RRC signaling). The SRS parameters are the above-mentioned bandwidth, hopping ON/OFF, frequency offset, cyclic shift sequence, repetition factor, etc.

Next, the radio base station apparatus (eNB) transmits an uplink grant including the other information (transmission timing common or specific to antennas, transmission information indicative of a frequency position and/or frequency bandwidth common or specific to antennas) to the mobile terminal device (UE) . The mobile terminal device receives the principal transmission information by RRC signaling, further receives the uplink grant including the other transmission information, and then, transmits the SRS. In other words, SRS parameters are configured by RRC signaling, and then, notification of SRS transmission is disclosed by the uplink grant. Thus, in the case of aperiodic SRS transmission, the principal transmission information among the transmission information is high-layer signaled, and the other transmission information is transmitted by the uplink grant. Then, after the SRS parameters are configured by RRC signaling, the mobile terminal device transmits the SRS according to the uplink grant.

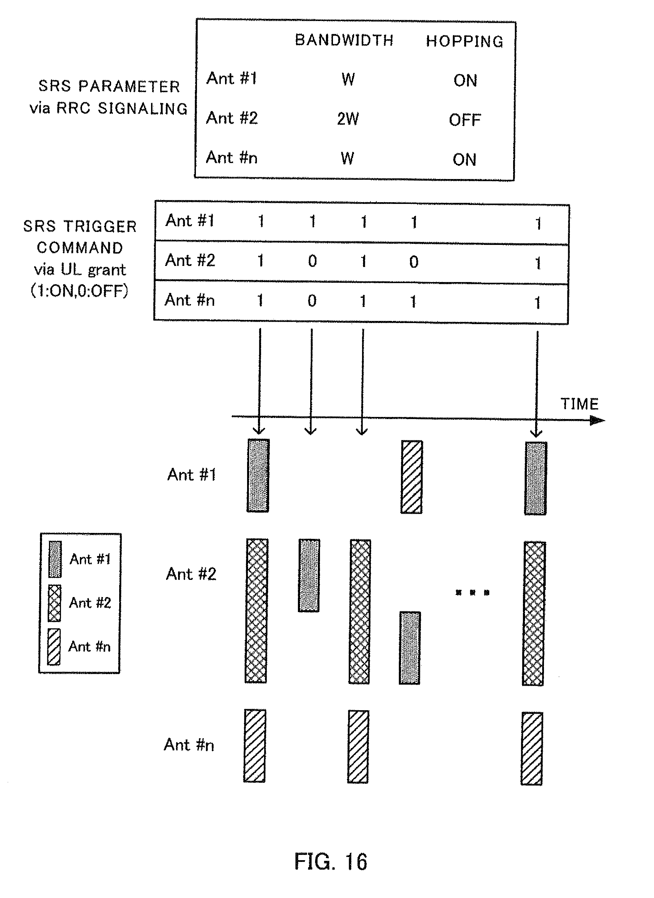

For example, as shown in FIG. 16, the radio base station apparatus (eNB) notifies the mobile terminal device (UE) of the bandwidth and the presence or absence of hopping as the principal transmission information (SRS parameters) by RRC signaling. Then, the radio base station apparatus (eNB) notifies the mobile terminal device (UE) of an SRS trigger command (transmission timing) as the other transmission information by the uplink grant. By this trigger command, the mobile terminal device transmits the SRS from each transmission antenna at timing as shown in FIG. 16. Thus, by beforehand configuring the SRS parameters except transmission timing by RRC signaling, it is possible to perform multiplexing and transmission of SRS with more flexibility and efficiency.

### (Transmission timing of SRS)

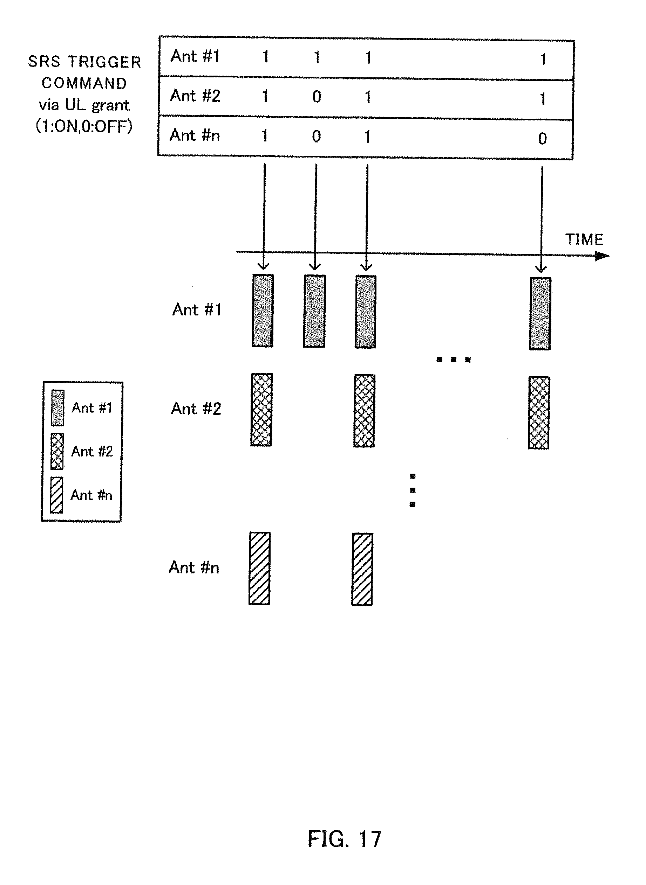

In the invention, transmission timing of SRS of transmission antennas in the mobile terminal device is set. In this case, the transmission timing of SRS includes transmission timing common to the transmission antennas, and transmission timing specific to the transmission antennas. For example, the transmission timing of SRS of the transmission antenna #1 (Ant #1) , the transmission timing of SRS of the transmission antenna #2 (Ant #2) , and the transmission timing of SRS of the transmission antenna #n (Ant #n) are set as shown in FIG. 17. The trigger command corresponds to the transmission timing, and "1" is ON, while "0" is OFF. The transmission information in this case is the information (SRS trigger command) of transmission timing, or information that associates the transmission antenna number with the transmission timing (SRS trigger command) . Thus, by controlling transmission timing of SRS, it is possible to control transmission ON/OFF of SRS for each transmission antenna on a subframe-by-subframe basis, and to reduce power consumption of the mobile terminal device more efficiently. Further, it is possible to use SRS resources more efficiently. By this means, it is possible to designate transmission of SRS only immediately before scheduling. In addition, transmission timing of SRS is not limited to FIG. 17, and is capable of being set as appropriate.

### (Transmission bandwidth of SRS: Bandwidth)

In the invention, the bandwidth of SRS of transmission antennas in the mobile terminal device is set. The transmissionbandwidthof SRS includes the transmission bandwidth common to the transmission antennas, and transmission bandwidths specific to the transmission antennas. The transmission bandwidth of SRS is the same as in the case of periodic SRS, and the detailed description thereof is omitted.

### (Transmission frequency offset of SRS: Frequency-domain position)

In the invention, the transmission frequency offset of SRS of transmission antennas in the mobile terminal device is set. The transmission frequency offset of SRS includes the transmission frequency offset common to the transmission antennas, and transmission frequency offsets specific to the transmission antennas. The transmission information in this case is the transmission frequency offset or information that associates the transmission antenna number with the transmission frequency offset.

### (Repetition factor of SRS: Transmission Comb)

In the invention, the repetition factor (the presence or absence of comb teeth state) of SRS of transmission antennas in the mobile terminal device is set. The repetition factor of SRS includes the repetition factor common to the transmission antennas, and repetition factors specific to the transmission antennas. The repetition factor of SRS is the same as in the case of periodic SRS, and the detailed description thereof is omitted.

### (Spreading code sequence for SRS: Cyclic shift)

In the invention, the spreading code sequence for SRS of transmission antennas in the mobile terminal device is set. The spreading code sequence for SRS includes the spreading code sequence for SRS common to the transmission antennas, and spreading code sequences for SRS specific to the transmission antennas. The spreading code sequence for SRS is the same as in the case of periodic SRS, and the detailed description thereof is omitted.

In addition, as parameters related to the SRS, there are a parameter (SRS subframe configuration) indicative of a subframe configuration to multiplex a cell-specific SRS, andaparameter (Simultaneous transmission of Ack/Nack and SRS) indicating whether or not to permit transmission of ACK/NACK and SRS in the same subframe. These parameters are notified from the radio base station apparatus to the mobile terminal device on the broadcast channel.

### <Multiplexing method of SRS>

As a multiplexing method when the mobile terminal device transmits the SRS to the base station apparatus, there are a code division multiplexing method, time division multiplexing method, frequency division multiplexing method, interleaved frequency division multiplexing method, etc.

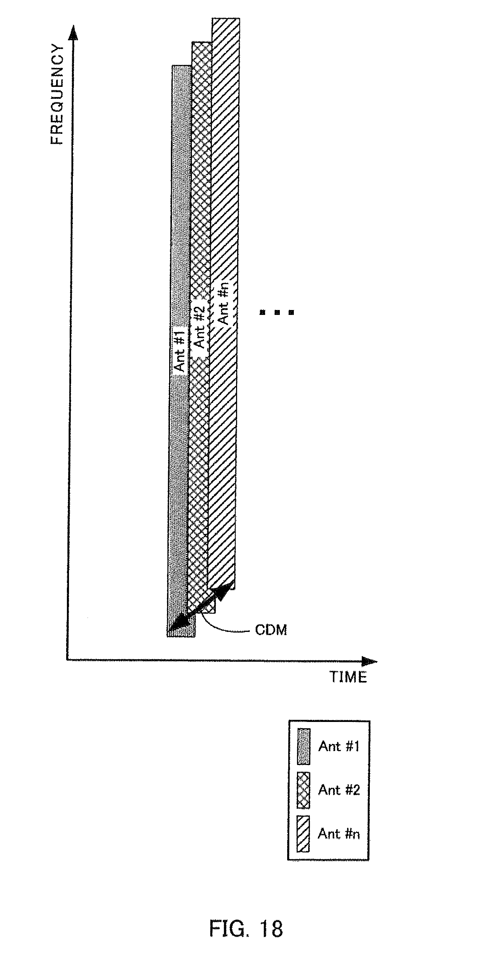

In transmitting the SRS in code division multiplexing, for example, as shown in FIG. 18, the SRS of the transmission antenna #1 (Ant #1) , the SRS of the transmission antenna #2 (Ant #2) , and the SRS of the transmission antenna #n (Ant #n) are assigned respective different spreading code sequences, for example, different cyclic shift amounts of the same CAZAC code. The cyclic shift amounts for the transmission antennas are notified by higher layer signaling or uplink grant on a common or individual to the transmission antennas basis as described above. It is preferable to use code division multiplexing when the same transmission bandwidth of SRS is set on the transmission antennas.

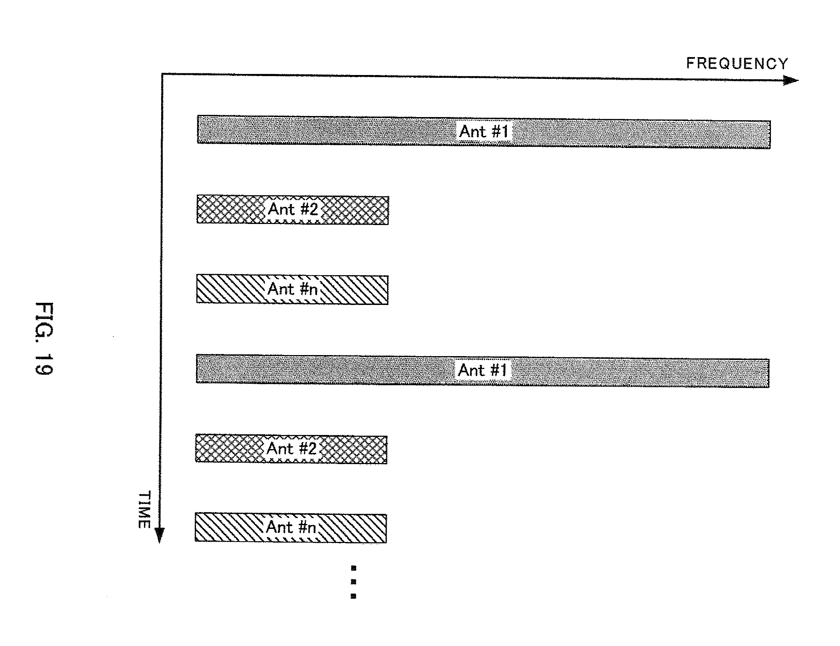

In transmitting the SRS in time division multiplexing, for example, as shown in FIG. 19, the SRS of the transmission antenna #1 (Ant #1) , the SRS of the transmission antenna #2 (Ant #2) , and the SRS of the transmission antenna #n (Ant #n) are transmitted at respective different timings. The transmission timing of f sets for the transmission antennas are notified by higher layer signaling or uplink grant on a common or individual to the transmission antennas basis as described above.

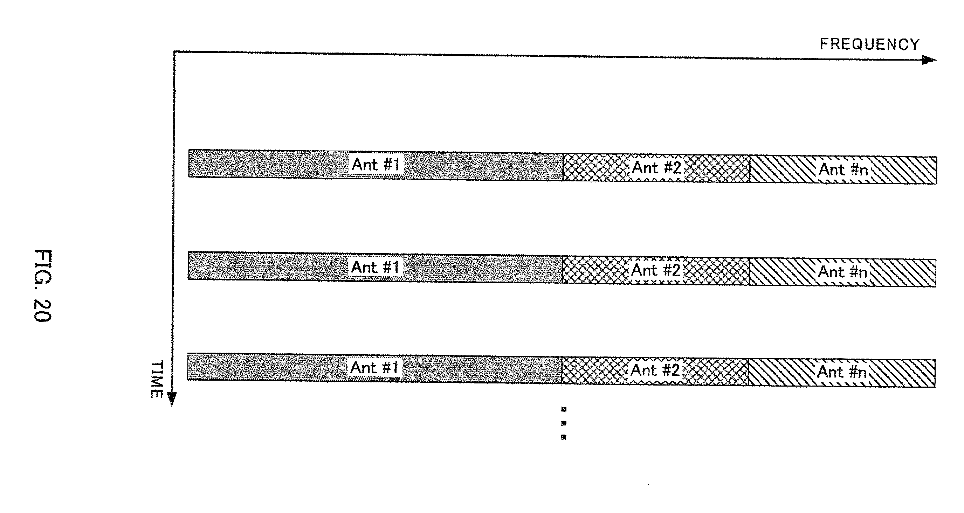

In transmitting the SRS in frequency division multiplexing, for example, as shown in FIG. 20, the SRS of the transmission antenna #1 (Ant #1) , the SRS of the transmission antenna #2 (Ant #2), and the SRS of the transmission antenna #n (Ant #n) are transmitted at respective different transmission bandwidths. The transmission bandwidths for the transmission antennas are notified by higher layer signaling or uplink grant on a common or individual to the transmission antennas basis as described above.

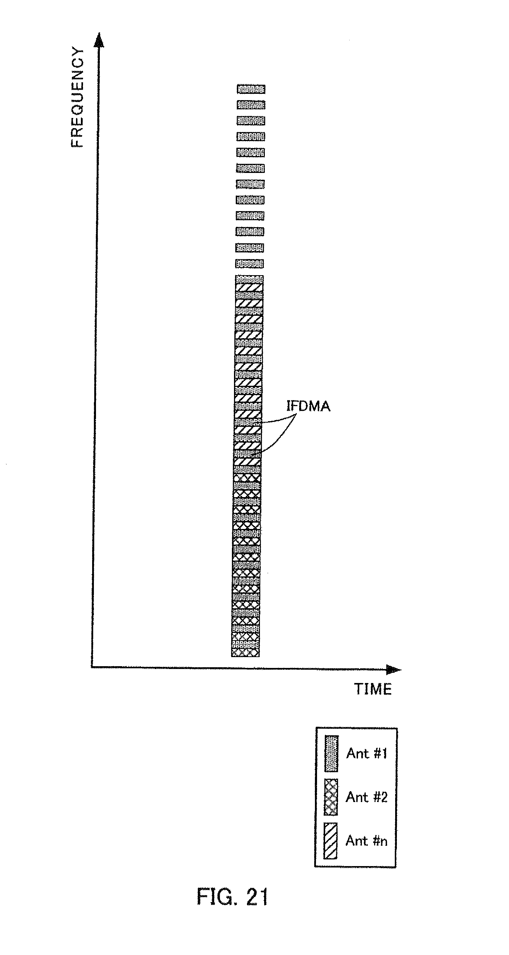

In transmitting the SRS in interleaved frequency division multiplexing, for example, as shown in FIG. 21, the SRS of the transmission antenna #1 (Ant #1) , the SRS of the transmission antenna #2 (Ant #2), and the SRS of the transmission antenna #n (Ant #n) are transmitted corresponding to the presence or absence of comb teeth state. The presence or absence of comb teeth state on the transmission antennas is notified by higher layer signaling or uplink grant on a common or individual to the transmission antennas basis as described above.

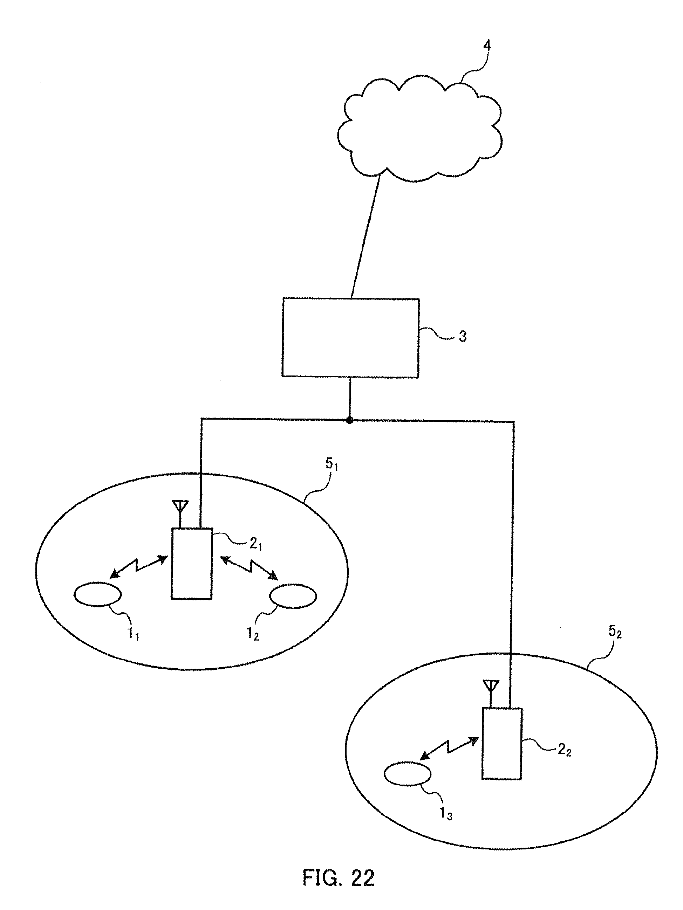

FIG. 22 is a diagram illustrating a radio communication system having the mobile terminal devices and the radio base station apparatuses according to the Embodiment of the invention.

The radio communication system is a system to which, for example, E-UTRA (Evolved UTRA and UTRAN) is applied. The radio communication system is provided with radio base station apparatuses (eNB: eNode B) 2 (2₁ , 2₂, ... ,2₁, 1 is an integer where 1>0) and a plurality of mobile terminal devices (UE) 1ₙ ( 1₁, 1₂, 1₃, ... , 1ₙ, n is an integer where n>0) that communicate with the radio base station apparatuses 2. The radio base station apparatuses 2 are connected to an upper station, for example, an access gateway apparatus 3, and the access gateway apparatus 3 is connected to a core network 4. The mobile terminal device 1ₙ communicates with the radio base station apparatus 2 in a cell 5 (5₁, 5₂) by E-UTRA. This Embodiment shows two cells, but the invention is similarly applicable to three cells or more. In addition, each of the mobile terminal devices (1₁, 1₂, 1₃, ... , 1ₙ) has the same configuration, function and state, and is described as a mobile terminal device 1ₙ unless otherwise specified in the following description.

In the radio communication system, as a radio access scheme, OFDM (Orthogonal Frequency Division Multiplexing) is applied in downlink, while SC-FDMA (Single-Carrier Frequency Division Multiple Access) is applied in uplink. OFDM is a multicarrier transmission scheme for dividing a frequency band into a plurality of narrow frequency bands (subcarriers), and mapping data to each subcarrier to perform communication. SC-FDMA is a single-carrier transmission scheme for dividing a frequency band for each terminal so that a plurality of mobile terminal devices uses mutually different frequency bands, and thereby reducing interference among the mobile terminal devices.

Described herein are communication channels in E-UTRA.
In downlink, used are the Physical Downlink Shared Channel (PDSCH) shared among the mobile terminal devices 1ₙ, and the Physical Downlink Control Channel (PDCCH) . The Physical Downlink Control Channel is also called the downlink L1/L2 control channel. User data i.e. normal data signals are transmitted on the Physical Downlink Shared Channel. Meanwhile, on the Physical Downlink Control Channel are transmitted downlink scheduling information (DL Scheduling Information), acknowledgement/negative acknowledgement information (ACK/NACK), uplink grant (UL Grant) , TPC command (Transmission Power Control Command) , etc. For example, the downlink scheduling information includes an ID of a user to perform communications using the Physical Downlink Shared Channel, information of a transport format of the user data, i.e. information on the data size, modulation scheme, and retransmission control (HARQ: Hybrid ARQ), downlink resource block assignment information, etc.

Meanwhile, for example, the uplink scheduling grant includes an ID of a user to perform communications using the Physical Uplink Shared Channel, information of a transport format of the user data, i.e. information on the data size and modulation scheme, uplink resource block assignment information, information on transmission power of the uplink shared channel, etc. Herein, the uplink resource block corresponds to frequency resources, and is also called the resource unit.

Further, the acknowledgement/negative acknowledgement information (ACK/NACK) is acknowledgement/negative acknowledgement information concerning the shared channel in uplink. The content of acknowledgement/negative acknowledgement information is expressed by Acknowledgement (ACK) indicating that the transmission signal is properly received or Negative Acknowledgement (NACK) indicating that the transmission signal is not properly received.

In uplink, used are the Physical Uplink Shared Channel (PUSCH) shared among the mobile terminal devices 1ₙ, and the Physical Uplink Control Channel (PUCCH). User data i.e. normal data signals are transmitted on the Physical Uplink Shared Channel. Meanwhile, on the Physical Uplink Control Channel is transmitted downlink channel quality information (CQI: Channel Quality Indicator) used in scheduling processing of the physical shared channel in downlink and adaptive modulation/demodulation and coding processing (AMC: Adaptive Modulation and Coding Scheme), and acknowledgement/negative acknowledgement information of the Physical Downlink Shared Channel.

On the Physical Uplink Control Channel, a scheduling request to request resource allocation of the uplink shared channel, release request in persistent scheduling and the like may be transmitted, in addition the CQI and acknowledgement/negative acknowledgement information. Herein, resource allocation of the uplink shared channel section that a radio base station apparatus notifies a mobile terminal device that the mobile terminal device is allowed to perform communications using an uplink shared channel in a subsequent subframe, using the Physical Downlink Control Channel in some subframe.

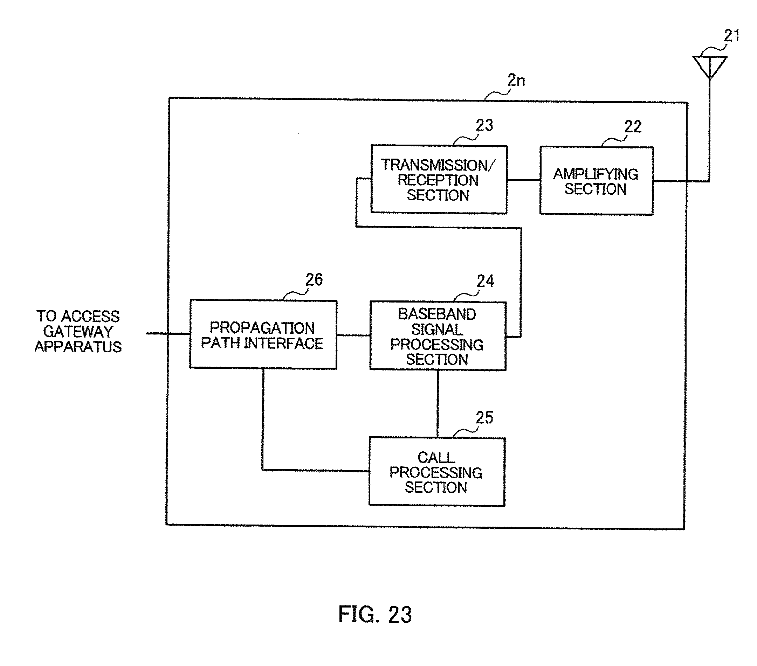

FIG. 23 is a block diagram illustrating a schematic configuration of the radio base station apparatus according to the Embodiment of the invention. The radio base station apparatus 2ₙ as shown in FIG. 23 is mainly comprised of an antenna 21, amplifying section 22, transmission/reception section 23, baseband signal processing section 24, call processing section 25 and propagation path interface 26.

In the radio base station apparatus 2ₙ with such a configuration, with respect to an uplink signal, a radio frequency signal received in the antenna 21 is amplified in the amplifying section 22 so that reception power is corrected to certain power under AGC. The amplified radio frequency signal is frequency-converted into a baseband signal in the transmission/reception section 23. The baseband signal is subjected to predetermined processing (error correction, decoding, etc.) in the baseband signal processing section 24, and then, is transferred to the access gateway apparatus, not shown, via the transmission path interface 25. The access gateway apparatus is connected to the core network, and manages each mobile terminal device. Further, concerning uplink, the reception SINR and interference level of the radio frequency signal received in the radio base station apparatus 2 are measured based on the uplink baseband signal.

The call processing section 25 transmits and receives call processing control signals to/from a radio control station that is an upper apparatus, and performs status management of the radio base station apparatus 2 and resource allocation.

With respect to a downlink signal, the upper apparatus inputs the signal to the baseband signal processing section 24 via the transmission path interface 26. The baseband signal processing section 24 performs retransmission control processing, scheduling, transmission format selection, channel coding and the like on the signal to transfer to the transmission/reception section 23 . The transmission/reception section 23 frequency-converts the baseband signal output from the baseband signal processing section 24 into a radio frequency signal. The frequency-converted signal is then amplified in the amplifying section 22 and transmitted from the antenna 21.

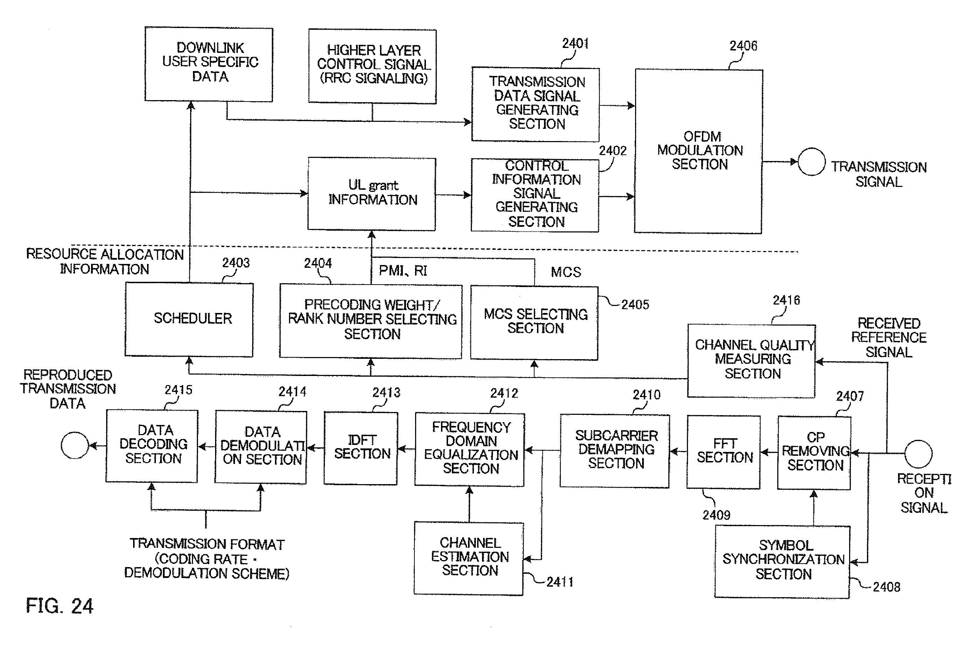

FIG. 24 is a block diagram illustrating a configuration of processing sections including the baseband signal processing section in the radio base station apparatus as shown in FIG. 23. The radio base station apparatus as shown in FIG. 24 is provided with a transmission section and a reception section. The transmission section is provided with a transmission data signal generating section 2401, control information signal generating section 2402, and OFDM modulation section 2406. The reception section is provided with a CP (Cyclic Prefix) removing section 2407, symbol synchronization section 2408, FFT section 2409, subcarrier demapping section 2410, channel estimation section 2411, frequency domain equalization section 2412, IDFT section 2413, data demodulation section 2414, and data decoding section 2415. Further, the radio base station apparatus is provided with a scheduler 2403, precoding weight/rank number selecting section 2404, and MCS selecting section 2405.

The transmission data signal generating section 2401 generates downlink user specific data and a higher layer control signal (RRC signaling) as a transmission data signal. The transmission data signal generating section 2401 outputs the transmission data signal to the OFDM modulation section 2406. The parameters of the periodic SRS are included in the signal, transmitted on the PDSCH, and are notified to the mobile terminal device. In the invention, the above-mentioned SRS parameters generated in the transmission data signal generating section 2401 are provided for each transmission antenna. The principal parameters of the aperiodic SRS are also included in the signal, transmitted on the PDSCH, and are notified to the mobile terminal device.

The control information signal generating section 2402 generates a control information signal including an uplink grant (UL grant information). The uplink grant includes resource allocation information, PMI, RI (Rank Indicator) , and MCS. In the case of periodic SRS transmission, the uplink grant does not include the SRS parameters. Meanwhile, in the case of aperiodic SRS transmission, the uplink grant includes the SRS parameters for each transmission antenna. The control information signal generating section 2402 outputs the control information signal to the OFDM modulation section 2406. The OFDM modulation section 2406 performs predetermined OFDM modulation processing on the transmission data signal and control information signal to be a transmission signal.

The CP removing section 2407 removes a CP from the reception signal and extracts an effective signal portion. The CP removing section 2407 outputs the CP-removed reception signal to the FFT (Fast Fourier Transform) section 2409. The symbol synchronization section 2408 acquires symbol synchronizationof the reception signal, and out puts information of symbol synchronization to the CP removing section 24 07 . Based on the information of symbol synchronization, the CP removing section 2407 removes the CP from the reception signal.

The FFT section 2409 performs FFT on the CP-removed reception signal to transform into the signal in the frequency domain. The FFT section 2409 outputs the FFT-processed signal to the subcarrier demapping section 2410. The subcarrier demapping section 2410 extracts a data signal from the FFT-processed signal that is the signal in the frequency domain using resource mapping information. The subcarrier demapping section 2410 outputs the signal subjected to subcarrier demapping to the channel estimation section 2411 and frequency domain equalization section 2412 .

The channel estimation section 2411 performs channel estimation using the signal (reference signal) subjected to subcarrier demapping. The channel estimation section 2411 outputs the obtained channel estimation value to the frequency domain equalization section 2412. The frequency domain equalization section 2412 compensates the data signal subjected to subcarrier demapping for the channel variance estimated in the channel estimation section 2411. The frequency domain equalization section 2412 outputs the equalized data signal to the IDFT (Inverse Discrete Fourier Transform) section 2413. The IDFT section 2413 transforms the signal in the frequency domain into the signal in the time domain. The IDFT section 2413 outputs the IDFT-processed signal to the data demodulation section 2414.

The data demodulation section 2414 performs data demodulation on the IDFT-processed signal with the data modulation scheme corresponding to the transmission format (coding rate/demodulation scheme). The data demodulation section 2414 outputs the data-demodulated signal to the data decoding section 2415. The data decoding section 2415 performs data decoding on the data-demodulated data signal to output as transmission data.

The channel quality measuring section 2416 measures quality information using the SRS transmitted from the mobile terminal device. The measured quality information is output to the scheduler 2403, precoding weight/rank number selecting section 2404 and MCS selecting section 2405.

The scheduler 2403 performs scheduling based on the quality information. The scheduler 2403 outputs resource allocation information to the transmission data signal generating section 2401 and control information signal generating section 2402. The precoding weight/rank number selecting section 2404 performs PMI selection and rank selection based on the quality information. The precoding weight/rank number selecting section 2404 outputs the PMI and RI to the control information signal generating section 2402. The MCS selecting section 2405 performs MCS selection based on the quality information. The MCS selecting section 2405 outputs the MCS to the control information signal generating section 2402.

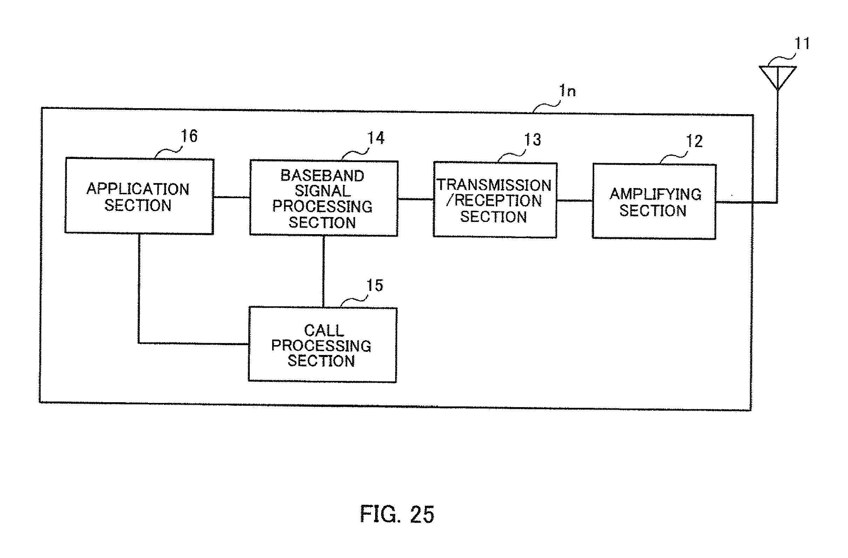

FIG. 25 is a block diagram illustrating a schematic configuration of the mobile terminal device according to the Embodiment of the invention. The mobile terminal device 1ₙ as shown in FIG. 25 is mainly comprised of an antenna 11, amplifying section 12, transmission/reception section 13, baseband signal processing section 14, call processing section 15 and application section 16.

In the mobile terminal device 1ₙ with such a configuration, with respect to a downlink signal, a radio frequency signal received in the antenna 11 is amplified in the amplifying section 12 so that reception power is corrected to certain power under AGC (Auto Gain Control). Theamplified radio frequency signal is frequency-converted into a baseband signal in the transmission/reception section 13. The baseband signal is subjected to predetermined processing (error correction, decoding, etc.) in the baseband signal processing section 14, and then, output to the call processing section 15 and application section 16. The call processing section 15 performs management of communications with the radio base station apparatus 2, and the application section 16 performs processing concerning higher layers than the physical layer and MAC layer. The mobile terminal device 1ₙ of the invention receives at least a downlink signal including a reference signal from each of a plurality of radio base station apparatuses involved in downlink COMP.

With respect to an uplink signal, the application section 16 inputs the signal to the baseband signal processing section 14 . The baseband signal processing section 14 performs retransmission control processing, scheduling, transmission format selection, channel coding and the like on the signal to transfer to the transmission/reception section 13 . The transmission/reception section 13 frequency-converts the baseband signal output from the baseband signal processing section 14 into a radio frequency signal. The frequency-converted signal is then amplified in the amplifying section 12 and transmitted from the antenna 11. The mobile terminal device 1ₙ of the invention transmits feedback information including a measurement result of channel quality to each of a plurality of radio base station apparatuses.

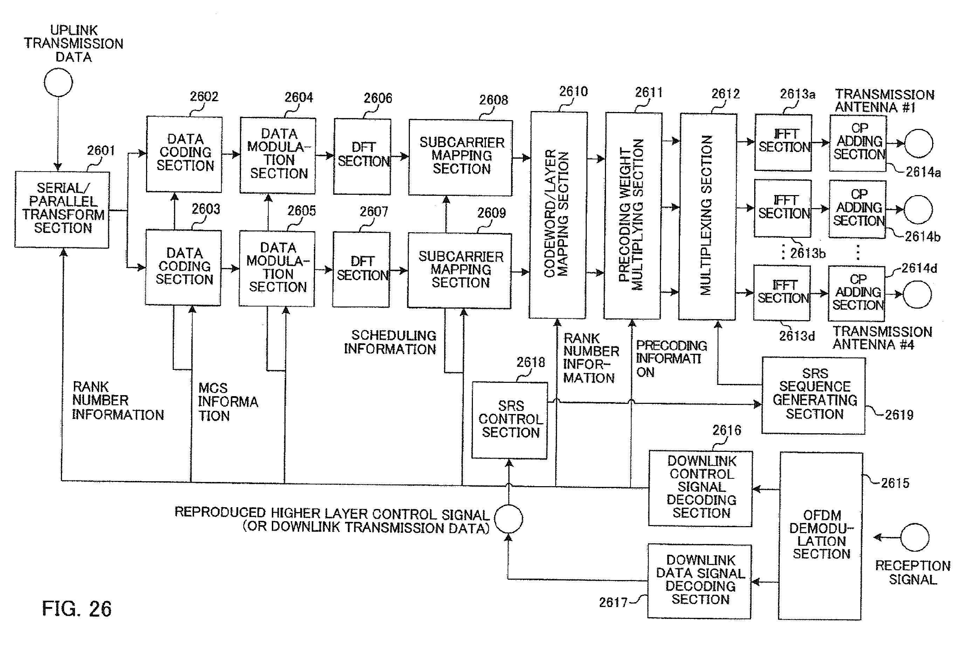

FIG. 26 is a block diagram illustrating a configuration of processing sections including the baseband signal processing section in the mobile terminal device as shown in FIG. 25. The mobile terminal device as shown in FIG. 26 is provided with a transmission section and a reception section. The transmission section is provided with a serial/parallel transform section 2601, data coding sections 2602, 2603, data modulation sections 2604, 2605, DFT sections 2606, 2607, subcarrier mapping sections 2608, 2609, codeword/layer mapping section 2610, precoding weight multiplying section 2611, multiplexing section 2612, IFFT sections 2613a to 2613d, and CP adding sections 2614a to 2614d. The reception section is provided with an OFDM demodulation section 2615, downlink control signal decoding section 2616, and downlink data signal decoding section 2617. Further, the mobile terminal device is provided with an SRS control section 2618 and SRS sequence generating section 2619. Described herein is the case where the rank number is "2" and the number of transmission antennas is "4" .

The OFDM demodulation section 2615 performs predetermined OFDM demodulation processing on a reception signal. The OFDM demodulation section 2615 outputs the demodulated signal to the downlink control signal decoding section 2616 and the downlink data signal decoding section 2617 . The downlink control signal decoding section 2616 decodes the demodulated downlink control signal (downlink L1/L2 control signal) . Further, the downlink control signal decoding section 2616 outputs the demodulated downlink control signal to the serial/parallel transform section 2601, data coding sections 2602, 2603, data modulation sections 2604, 2605, subcarrier mapping sections 2608, 2609, SRS control section 2618, codeword/layer mapping section 2610, and precoding weight multiplying section 2611.

In other words, the RI (rank number information) is output to the serial/parallel transform section 2601 and codeword/layer mapping section 2610, the MCS information is output to the data coding sections 2602, 2603, and data modulation sections 2604, 2605, the scheduling information (resource allocation information) is output to the subcarrier mapping sections 2608, 2609, and the precoding information (PMI) is output to the precoding weight multiplying section 2611.

Since the transmission information (SRS parameters) for aperiodic SRS is included in an uplink grant, the SRS parameters (for example, transmission timing, etc.) are output to the SRS control section 2618. Meanwhile, in periodical SRS transmission, the transmission information (SRS parameters) is not output from the downlink control signal (downlink L1/L2 control signal).

The downlink data signal decoding section 2617 decodes the demodulated downlink data signal. Further, the downlink data signal decoding section 2617 outputs the demodulated downlink data signal to the SRS control section 2618. In periodic SRS transmission, the transmission information (SRS parameters, for example, transmission interval) is extracted from the higher layer control signal or downlink transmission data and output to the SRS control section 2618.

The SRS control section 2618 controls the SRS transmission aspect of each transmission antenna, using the SRS parameters that are the transmission information extracted from higher layer signaling (periodic SRS transmission, aperiodic SRS transmission) or uplink grant (aperiodic SRS transmission). Herein, the transmission aspect is assumed to include all transmission aspects as shown in FIGs. 6 to 14. Further, the SRS control section 2618 also controls the multiplexing method (FIGs. 17 to 21) of the SRS generated in the SRS sequence generating section 2619. Such control information according to the transmission aspect of the SRS is output to the multiplexing section 2612.

The serial/ parallel transform section 2601 performs serial/parallel transform on uplink transmission data. The serial/parallel transform section 2601 outputs the signal subjected to serial/parallel transform to the data coding sections 2602, 2603. The data coding sections 2602, 2603 perform error correcting coding on the data signals, using the channel coding rate associated with the MCS information. The data coding sections 2602, 2603 output the data signals subjected to error correcting coding to the data modulation sections 2604, 2605.

The data modulation sections 2604, 2605 perform data modulation on the data-coded data signals with the data modulation scheme associated with the MCS information. The data modulation sections 2604, 2605 output the data-modulated data signals to the DFT (Discrete Fourier Transform) sections 2606, 2607. The DFT sections 2606, 2607 transform the data signals in the time domain into the signals in the frequency domain. The DFT sections 2606, 2607 output the DFT-processed data signals to the subcarrier mapping sections 2608, 2609.

The subcarrier mapping sections 2608, 2609 map the DFT-processed data signals to subcarriers based on the scheduling information. The subcarrier mapping sections 2608, 2609 output the subcarrier-mapped data signals to the codeword/layer mapping section 2610.

The codeword/layer mapping section 2610 maps a codeword to a layer based on the rank number information. The codeword/layer mapping section 2610 outputs the mapped signal to the precoding weight multiplying section 2611. The precoding weight multiplying section 2611 multiplies the signal mapped to the layer by a precoding weight, based on the precoding information. The precoding weight multiplying section 2611 outputs the precoded signal to the multiplexing section 2612.

The multiplexing section 2612 multiplexes the SRS into the precoded data signal. The multiplexing section 2612 outputs the signal with the SRS multiplexed to the IFFT (Inverse Fast Fourier Transform) sections 2613a to 2613d. The IFFT sections 2613a to 2613d perform IFFT on the multiplexed signals to transform into the signals in the time domain. The IFFT sections 2613a to 2613d output the IFFT-processed signals to the CP adding sections 2614a to 2614d. The CP adding sections 2614a to 2614d add CPS to the IFFT-processed signals.

In the above-mentioned radio communication system, when the SRS is transmitted periodically, the radio base station apparatus transmits the SRS parameters to the mobile terminal device by higher layer signaling (RRC signaling) . The SRS parameters are the above-mentioned bandwidth, hopping ON/OFF, frequency offset, cyclic shift sequence, repetition factor, transmission interval, transmission timing offset, etc. When the mobile terminal device receives the SRS parameters by RRC signaling, the mobile terminal device transmits the SRS periodically at particular time intervals (T) . At this point, the mobile terminal device controls the transmission aspect of the SRS based on the SRS parameters, and transmits the SRS to the radio base station apparatus. In addition, in periodic SRS transmission, an uplink grant does not include information indicative of SRS transmission timing.

Meanwhile, when the SRS is transmitted non-periodically, the radio base station apparatus transmits the principal transmission information (SRS parameters) to the mobile terminal device by higher layer signaling (RRC signaling). The SRS parameters are the above-mentioned bandwidth, hopping ON/OFF, frequency offset, cyclic shift sequence, repetition factor, etc. Next, the radio base station apparatus transmits an uplink grant including the other information (transmission timing common or individual to antennas, transmission information indicative of frequency position and/or frequency bandwidth common or individual to antennas) to the mobile terminal device. The mobile terminal device receives the principal transmission information by RRC signaling, further receives the uplink grant including the other transmission information, and then, transmits the SRS.

Thus, according to the invention, the radio base station apparatus performs OFDM modulation on a transmission signal including transmission information on the SRS for each transmission antenna, and transmits the OFDM-modulated transmission signal, the mobile terminal device receives the signal including the transmission information, controls a transmission aspect of the SRS for each transmission antenna based on the transmission information, and transmits the SRS in the transmission aspect for each transmission antenna, and therefore, it is possible to efficiently use the SRS in the LTE-A system.

In a wireless communication method of the invention, it is possible to perform control as described below in periodic SRS transmission and aperiodic SRS transmission.

### <Periodic SRS transmission>

(1) Among a plurality of transmission antennas, when there is a transmission antenna of low gain, the radio base station apparatus side decreases the transmission interval of the transmission antenna or halts transmission temporarily or consecutively, and it is thereby possible to suppress resources of the SRS. At this point, by using the ATOV as the precoding weight, it is possible to suppress deterioration of characteristics of the data channel.
(2) Among a plurality of transmission antennas, when there is a transmission antenna of low gain, the radio base station apparatus side increases the SRS transmission intervals of transmission antennas except the transmission antenna, and it is thereby possible to enhance transmission characteristics of the data channel.
(3) In above-mentioned (1) and (2) , the transmission interval is set corresponding to the variation amount (characteristics such as a variation period) of AGI, and it is thereby possible to efficientlyuse SRS resources.
(4) In an environment in which AGI is large, the SRS is transmitted in a narrow band from a transmission antenna of low gain (transmission antenna limited in maximum transmission power) , while being transmitted in a broadband from a transmission antenna of high gain, and it is thereby possible to efficiently transmit the SRS according to the AGI.
(5) In the case of a channel with large correlation between transmission antennas, since it is inefficient to transmit the SRS from a plurality of transmission antennas, it is possible to control the transmission antenna, transmission bandwidth and transmission interval to transmit the SRS adaptively.
(6) When the SRS is transmitted from a plurality of transmission antennas, the repetition factor is varied corresponding to antenna gain to control transmission power. Similarly, in a transmission antenna desired to increase channel estimation accuracy, in IFDMA, by setting the subcarrier spacing selected in the shape of comb teeth at a 2-subcarrier spacing (repetition factor=2) , it is possible to enhance channel estimation accuracy.

### <Aperiodic SRS transmission>

(1) In an environment in which AGI is large, it is possible to confirm that characteristics of a transmission antenna, which have been poor, are improved.
(2) Among the parameters such as the frequency position, frequency bandwidth, ON/OFF of frequency hopping, transmission duration, transmission interval, offset of transmission subframe, the presence or absence of IFDMA, and spreading code sequence, some of the parameters are notified by an uplink grant, the other parameters are notified by RRC signaling, and it is thereby possible to reduce the control signal amount.
(3) In a system for dividing resources by scheduling, by assigning the SRS preferentially to a user of a high scheduling priority, it is possible to improve characteristics.
(4) Concerning SRS transmission, by using higher layer signaling for some of the parameters, it is possible to reduce control signals in aperiodic SRS transmission.
(5) SRS transmission is performed implicitly, for example, by using reception of a power control signal (TPC command or the like) from the radio base station apparatus as a trigger, and it is thereby possible to reduce control signals in aperiodic SRS transmission.
(6) By combining periodic SRS transmission and aperiodic SRS transmission, it is possible to obtain required sufficient channel information.

The present invention is not limited to the above-mentioned Embodiment, and is capable of being carried into practice with various modifications thereof. In the above-mentioned Embodiment, the rank number and the number of transmission antennas are examples, and the invention is not limited thereto. Further, without departing from the scope of the invention, the number of processing sections and processing procedures in the above-mentioned description are capable of being carried into practice with modifications thereof as appropriate. Furthermore, each element shown in the figures represents the function, and each functional block may be actualized by hardware or may be actualized by software. Moreover, the invention is capable of being carried into practice with modifications thereof as appropriate without departing from the scope of the invention.

### Industrial Applicability

The present invention is useful in the radio base station apparatus, mobile terminal device and wireless communication method in the LTE-A system.

The present application is based on Japanese Patent Application No. 2010-030626 filed on February 15, 2010, entire content of which is expressly incorporated by reference herein.

## Claims

1. A radio base station apparatus comprising:
an OFDM modulation section that performs OFDM modulation on a transmission signal including transmission information on sounding reference signals for each transmission antenna; and
a transmission section that transmits the transmission signal subjected to OFDM modulation.

2. The radio base station apparatus according to claim 1, wherein the sounding reference signals are periodic sounding reference signals, and the transmission information undergoes higher layer signaling.

3. The radio base station apparatus according to claim 1, wherein the transmission information is a transmission interval of each of the sounding reference signals.

4. The radio base station apparatus according to claim 1 , wherein the transmission information is a transmission duration of each of the sounding reference signals.

5. The radio base station apparatus according to claim 1 , wherein the transmission information is information indicative of ON/OFF of transmission of each of the sounding reference signals.

6. The radio base station apparatus according to claim 1, wherein the transmission information is an offset value of transmission timing of each of the sounding reference signals.

7. The radio base station apparatus according to claim 1, wherein the transmission information is a transmission ratio of the sounding reference signals for each transmission antenna.

8. The radio base station apparatus according to claim 1, wherein the transmission information is a transmission bandwidth of each of the sounding reference signals.

9. The radio base station apparatus according to claim 8, wherein the transmission bandwidth is determined corresponding to a propagation loss value for each transmission antenna.

10. The radio base station apparatus according to claim 8, wherein the transmission bandwidth is a bandwidth in a bandwidth broadcast on a broadcast channel.

11. The radio base station apparatus according to claim 1 , wherein the transmission information is information indicative of ON/OFF of hopping of transmission of each of the sounding reference signals.

12. The radio base station apparatus according to claim 1, wherein the transmission information is a repetition factor of each of the sounding reference signals.

13. The radio base station apparatus according to claim 1, wherein the transmission information is a spreading code sequence for each of the sounding reference signals.

14. The radio base station apparatus according to claim 1 , wherein the sounding reference signals are aperiodic sounding reference signals, and the transmission information is transmitted by an uplink grant.

15. The radio base station apparatus according to claim 1, wherein the transmission information is transmission timing of eachof the sounding reference signals.

16. The radio base station apparatus according to claim 14, wherein the transmission information is a transmission bandwidth of each of the sounding reference signals.

17. The radio base station apparatus according to claim 1 , wherein the transmission information is a transmission frequency offset of each of the sounding reference signals.

18. The radio base station apparatus according to claim 14, wherein the transmission information is a repetition factor of each of the sounding reference signals.

19. The radio base station apparatus according to claim 1, wherein the transmission information is a spreading code sequence for each of the sounding reference signals.

20. The radio base station apparatus according to claim 1, wherein among the transmission information, principal transmission information undergoes higher layer signaling, and the other transmission information is transmitted by an uplink grant.

21. A mobile terminal device comprising:
a plurality of transmission antennas;
a reception section that receives a signal including transmission information on sounding reference signals for each of the transmission antennas;
a control section that controls a transmission aspect of the sounding reference signals for each of the transmission antennas based on the transmission information; and
a transmission section that transmits the sounding reference signals in the transmission aspect for each of the transmission antennas.

22. The mobile terminal device according to claim 21, wherein the sounding reference signals are periodic sounding reference signals, and the transmission information undergoes higher layer signaling.

23. The mobile terminal device according to claim 21, wherein when the same transmission bandwidth of sounding reference signals is set on the transmission antennas, the mobile terminal device performs code division multiplexing on the sounding reference signals for each of the transmission antennas to transmit.

24. The mobile terminal device according to claim 21, wherein the mobile terminal device performs time division multiplexing on the sounding reference signals for each of the transmission antennas to transmit.

25. The mobile terminal device according to claim 21, wherein the mobile terminal device performs frequency division multiplexing on the sounding reference signals for each of the transmission antennas to transmit.

26. The mobile terminal device according to claim 21, wherein the mobile terminal device performs interleaved frequency division multiplexing on the sounding reference signals for each of the transmission antennas to transmit.

27. The mobile terminal device according to claim 21, wherein the sounding reference signals are aperiodic sounding reference signals, and the transmission information is transmitted by an uplink grant.

28. A wireless communication method comprising:
in a radio base station apparatus,
performing OFDM modulation on a transmission signal including transmission information on sounding reference signals for each transmission antenna;
transmitting the transmission signal subjected to OFDM modulation;
in a mobile terminal device,
receiving the signal including the transmission information;
controlling a transmission aspect of the sounding reference signals for each transmission antenna based on the transmission information; and
transmitting the sounding reference signals in the transmission aspect for each transmission antenna.

29. The wireless communication method according to claim 28, wherein the sounding reference signals are periodic sounding reference signals, and the transmission information undergoes higher layer signaling.

30. The wireless communication method according to claim 28, wherein the sounding reference signals are aperiodic sounding reference signals, and the transmission information is transmitted by an uplink grant.
